# EUROPÄISCHE PATENTSCHRIFT

(11) **EP 0 741 674 B1**
(45) Veröffentlichungstag und Bekanntmachung des Hinweises auf die Patenterteilung: **16.07.1997**
(21) Anmeldenummer: 95907600.1
(22) Anmeldetag: 25.01.1995
(51) Int. Cl.: C03B 37/05

(54) **VORRICHTUNG ZUM HERSTELLEN VON MINERALFASERN AUS EINER SILIKATISCHEN SCHMELZE**
MACHINE FOR THE PRODUCTION OF MINERAL FIBRES FROM A SILICATE MELT
DISPOSITIF DE FABRICATION DE FIBRES MINERALES A PARTIR D'UNE MATIERE FONDUE DE SILICATE

(30) Priorität: 28.01.1994 DE 4402489
(43) Veröffentlichungstag der Anmeldung: 13.11.1996
(73) Patentinhaber: Deutsche Rockwool Mineralwoll-GmbH, 45966 Gladbeck (DE)
(72) Erfinder: KLOSE, Gerd-Rüdiger, D-46886 Dorsten (DE)
(74) Vertreter: Wanischeck-Bergmann, Axel, Dipl.-Ing.
(86) Internationale Anmeldenummer: EP9500254
(87) Internationale Veröffentlichungsnummer: WO9520547

(56) Entgegenhaltungen:
- FR-A- 2 356 606
- US-A- 2 605 500
- US-A- 3 303 009
- DATABASE WPI Section Ch, Week 8914 17.Mai 1989 Derwent Publications Ltd., London, GB; Class F01, AN 89-105202 & SU,A,1 423 510 (EXPER. SOYUZSTROIKON) , 15.September 1988

## Beschreibung

Die Erfindung bezieht sich auf eine Vorrichtung zum Herstellen von Mineralfasern aus einer silikatischen Schmelze mit mehreren rotierenden Walzen, auf welche die Schmelze aufgegeben wird.

Vorrichtungen der zuvor genannten Gattung sind in der Praxis und auch aus zahlreichen Literaturstellen in den verschiedenartigsten Ausführungen bekannt. Speziell bei der Herstellung von Steinwolle sind sogenannte Kaskaden-Spinnmaschinen gebräuchlich. Hierbei ist eine Mehrzahl von umlaufenden Walzen kaskadenartig zueinander angeordnet, d. h. es sind mehrere Walzen in der Höhe versetzt übereinander vorgesehen. Die Schmelze, die zunächst auf die oberste Walze trifft, wird infolge der Rotationsgeschwindigkeit nach außen geschleudert, wobei jeweils ein Teil der Schmelze zu Fasern ausgezogen wird. Der übrige Teil der Schmelze trifft dann auf die darunter befindlichen Walzen, wo sich der Vorgang bis zur untersten Walze wiederholt. Dabei wird selbstverständlich angestrebt, daß möglichst die gesamte kontinuierlich zugeführte Schmelze in Fasern umgewandelt wird. Durch auf dem Umfang der Walzen befindliche Luftdüsen werden die Fasern kontinuierlich von dem Zerfaserungsaggregat, d. h. beispielsweise von der Kaskaden-Spinnmaschine abgeführt und in einer Sammelkammer gesammelt, aus der dann der Faserstrom in Form eines Haufwerkes kontinuierlich zur Weiterverarbeitung gefördert wird. In der Sammelkammer werden die entstandenen Fasern von einem fein verteilten Bindemittel besprüht und gleichzeitig durch Aufsprühen von ebenfalls fein verteilten Wasserströpfchen möglichst schnell so weit abgekühlt, daß das aufgesprühte Bindemittel nicht vorzeitig aushärtet.

Diese Kaskaden-Spinnmaschinen, die, wie gesagt, bevorzugt für die Herstellung von Steinwolle eingesetzt werden sowie die entsprechenden Kaskaden-Schleuder-Verfahren gelten in der Fachwelt als leistungsfähige Systeme zum Dispergieren einer silikatischen Schmelze mit dem Ziel, faserförmige Körper, wie Matten oder Platten oder sonstige Formkörper, zu erzeugen.

Eine besondere Zerfaserungskonstruktion zur Bildung von Glasfasern aus einer Glasschmelze ist aus der SU-A-1423-510 bekannt. Die Glasschmelze fließt aus einer Aufgaberinne zunächst in freiem Fall und in Form eines zylindrischen Stromes in Richtung einer um eine waagerechte Achse drehenden ersten Trommel. Bevor der Schmelzstrom auf die Trommel trifft, wird er durch zwei beiderseitige oberhalb und senkrecht zur vertikalen Drehachsenebene der Trommel ausströmende Gasströme abgeflacht, so daß auf diese Weise ein größerer mittlerer Bereich des Umfangs der Trommel von der Glasschmelze beaufschlagt wird. Unterhalb der ersten Trommel befinden sich zwei weitere Trommeln mit unterschiedlicher Drehrichtung und gleichem Durchmesser wie die erste Trommel. Diese beiden weiteren Trommeln haben ebenfalls waagerechte Drehachsen, die mit der Drehachse der ersten oberen Trommel in einem gleichschenkligen Dreieck mit Spitze oben liegen. Die Glasschmelze wird dabei von allen drei Trommeln in Form von Fasern ausgeschleudert.

Der Erfindung liegt jedoch die Erkenntnis zu Grunde, daß die bekannten Kaskaden-Spinnmaschinen mit einer Reihe von Nachteilen behaftet sind, die zu entsprechenden Problemen führen.

Ein wesentlicher Mangel bei der Verwendung der bekannten Kaskaden-Spinnmaschinen bzw. bei der Anwendung eines entsprechenden Kaskaden-Schleuder-Verfahrens ist darin zu sehen, daß der Schmelzstrom in einer leicht schräg geneigten nach oben hin offenen Rinne aus dem üblichen Kupolofen auf die oberste Walze der Kaskaden-Spinnmaschine fließt. Das Abfließen erfolgt nicht gleichmäßig, sondern es kommt eher zu einem Plätschervorgang. Die Ursache liegt einmal darin, daß die in einem Kupolofen aufgebaute Luftströmung pulsiert und diese Pulsationen auf den Schmelzmassestrom übertragen werden und daher der Schmelzstrom nicht konstant fließt. Die Schmelze bahnt sich anschließend vergleichbar mit einem kleinen Lavastrom auf der offenen Rinne einen Weg durch die in der Rinne bereits teilweise erstarrte Schmelze, wobei die erstarrte Schmelze teilweise wieder aufgelöst oder von dem Schmelzstrom mitgerissen wird, während an anderen Stellen neue Ablagerungen in der Rinne entstehen können. Auf diese Weise verliert die Schmelze nicht nur in erheblichem Maße Energie, sondern wird auf Grund der starken Viskosität-Temperatur-Abhängigkeit, welche die verarbeitenden Schmelzen charakterisieren, ausgesprochen inhomogen.

Es kommt hinzu, daß der mit einer Geschwindigkeit von größenordnungsmäßig 0,35 m/s auf die oberste Walze auftreffende Schmelzstrom einen annähernd kreisrunden Querschnitt aufweist, so daß die einzelnen Masseteile bei ihrem Auftreffen auf die mit höherer Umfangsgeschwindigkeit rotierende Walze entsprechend unterschiedlich beschleunigt werden. Bereits bei der ersten obersten Walze kommt es so zu einem Ablösen der Schmelze vom Umfang der Walze unter Bildung fasriger und nicht fasriger Bestandteile. Die Schmelze hat zudem auf Grund der innewohnenden Oberflächenspannung eine Tendenz zu einer Verkleinerung der Oberfläche, d. h. zu einem gewissen Zusammenziehen des Schmelzestromes. Dies setzt sich dann auch beim weiteren Durchfließen durch die sich nach unten anschließende Kaskade fort. Dies wirkt sich besonders deshalb aus, weil zwischen den nachfolgenden zu einander versetzten Walzen der Kaskaden-Spinnmaschine ein verhältnismäßig breiter Spalt vorhanden ist. Infolge der versetzten Anordnung der Walzen und durch Wirkung der Fliehkraft wird immerhin jeweils ein Teilstrom abgeschleudert, der dann auf die nächste Walze trifft. Dabei nimmt jede der Walzen in Abhängigkeit von der Benetzungsfläche und ihres durch das Haftvermögen und der Umfangsgeschwindigkeit bewirkten Transport eine entsprechende Masse der Schmelze auf und verteilt diese unter Bildung von Partikeln partiell auf der jeweiligen Walzenoberfläche. Die auf Grund der Zentrifugalkraft aus der Schmelze gelösten Partikel bilden nicht nur Fasern bzw. ziehen sich zu Fasern aus, sondern es entstehen auch teilweise kugelförmige Gebilde. Es ist bekannt, daß neben der Zentrifugalkraft auch die Temperatur und die genetische Energie wesentlichen Einfluß auf die Art der gebildeten Fasern oder sonstigen Partikel haben. Die Faserbildung wird weiterhin dadurch beeinflußt, daß Luft- oder Dampfströme im Bereich des äußeren Umfanges der Walzen auf die Fasern und sonstigen Partikel einwirken, so daß diese aus ihrer radialen Fliehrichtung etwa um 90° umgelenkt und etwa parallel zu den Walzenachsen abgeleitet werden.

Noch eine weitere Einflußgröße ist zu beachten, nämlich die Verweildauer der Fasern im Bereich des Ortes ihrer Entstehung. Die Verweildauer hat Einfluß auf die Abkühlungsgeschwindigkeit und auf die Benetzung der Fasern mit Bindemitteln, die ihre Reaktivität bis zu einer endgültigen Fixierung der aus einem Faserhaufwerk aufgebauten Mineralwolle-Dämmstoff-Struktur, z. B. einer Mineralwollematte, in einem Härteofen erhalten müssen. Die Verweildauer wird ungünstig durch folgende beeinflußt. Die Walzen der Kaskaden-Spinnmaschine bilden zusammen mit den in einem geschlossenen Block zusammengefaßten Antriebs- und Zuführeinrichtungen auf der einen Stirnseite gewissermaßen eine geschlossene Wand. Wenn nun die Zuführdüsen für die zuvor genannten Luft- oder Dampfströme im Umfangsbereich der Walzen angeordnet sind, so führen die dabei entstehenden Strömungen zwangsweise zu Rückströmungen oder gar zu Verwirbelungen. Dadurch wird der Abtransport von Fasern verzögert. Daraus ergeben sich dann zwei Nachteile, daß nämlich die Fasern mit zu hohen Bindemittelmengen besprüht werden und daß zumindest Anteile der Bindemittel durch zu langes Verweilen im Entstehungsbereich der Fasern bei zu hohen Temperaturen entsprechend zu früh aushärten.

Aus den zuvor erläuterten Gründen ist bei den bisher bekannten Kaskaden-Spinnmaschinen der nicht zerfaserte Anteil der Schmelze viel zu hoch, d. h. durch in der Natur des Zerfaserungsverfahrens begründete Umstände sowie durch nahezu regelmäßig auftretende Betriebsbedingungen liegt der Zerfaserungsgrad in Bezug auf die eingesetzte Schmelze zumindest zeitweise bei unter 50%. Dabei können die nicht fasrigen, stengeligen oder kugelförmigen Teile und Partikel nur teilweise aus dem sich in der Sammelkammer bildenden Faserhaufwerk ausgeschieden werden. Diese unerwünschten Anteile stellen in den Mineralwolle-Dämmstoffen einen unerwünschten Ballast dar, der die wärmetechnischen und mechanischen Eigenschaften der Dämmstoffe entsprechend ungünstig beeinflußt. Außerdem ist die zu dem Schmelzen dieser ungünstigen Anteile benötigte Energie weitgehend verloren.

Bei der Erfindung wird somit ein völlig anderer Weg beschritten, wobei davon ausgegangen wird, daß die herzustellenden Fasern ein Durchmesserspektrum von einigen zentel Mikrometern bis zu einigen zehn Mikrometern bei entsprechend unterschiedlichen Längen aufweisen sollten. Erwünscht ist ein möglichst enges Durchmesserspektrum im Bereich zwischen etwa 2 bis 8 µm.

Der Erfindung liegt somit die Aufgabe zu Grunde, eine Vorrichtung zu schaffen, durch die der Anteil nicht fasriger Bestandteile wesentlich herabgesetzt wird, das Längen- und Durchmesserspektrum der Fasern optimiert werden kann und die Verweildauer der Fasern im Bereich ihrer Entstehung verkürzt werden kann.

Die gestellte Aufgabe wird erfindungsgemäß dadurch gelöst, daß eine zentrale Verteilungswalze mit großem Durchmesser vorgesehen ist, um deren Umfang mehrere Zerfaserungswalzen mit kleinem Durchmesser angeordnet sind, daß die Abstände der Zerfaserungswalzen von der Umfangsoberfläche der Verteilungswalze in deren Drehrichtung gesehen in dem Maße kleiner gewählt sind, in dem die Dicke der Schmelzeschicht sich verringert, daß die Drehrichtung der Zerfaserungs-walzen entgegengesetzt zur Drehrichtung der Verteilungswalze gewählt ist, so daß die benachbarten Umfangsbereiche der Zerfaserungswalzen und der Verteilungswalze gleiche Bewegungsrichtung aufweisen, und daß über dem Scheitelbereich der Verteilungswalze eine Aufgabevorrichtung für die Schmelze mit einer vertikalen auf die Breite der Verteilungswalze abgestimmten Austrittsöffnung angeordnet ist.

Ein wesentlicher Vorteil besteht darin, daß auf Grund des großen Durchmessers der zentralen Verteilungswalze und der besonderen Aufgabe der Schmelze zunächst eine weitgehend gleichmäßig dicke, die Breite der Walze ausnutzende Schicht der Schmelze gebildet wird, die dann schrittweise von den Zerfaserungswalzen übernommen und auf diesen dann zu Fasern ausgeschleudert wird. Dabei hat sich die Erkenntnis bewahrheitet, daß eine anfängliche gute Verteilung der Schmelze Voraussetzung für eine anschließende kontrollierte Zerfaserung ist.

Als besonders vorteilhaft hat sich erwiesen, daß die Umfangsgeschwindigkeiten der Verteilungswalze zu 30 bis 70 m/s und die der Zerfaserungswalzen zu 90 bis 170 m/s gewählt sind.

Weitere vorteilhafte Ausgestaltungen der Erfindung ergeben sich aus den weiteren Unteransprüchen.

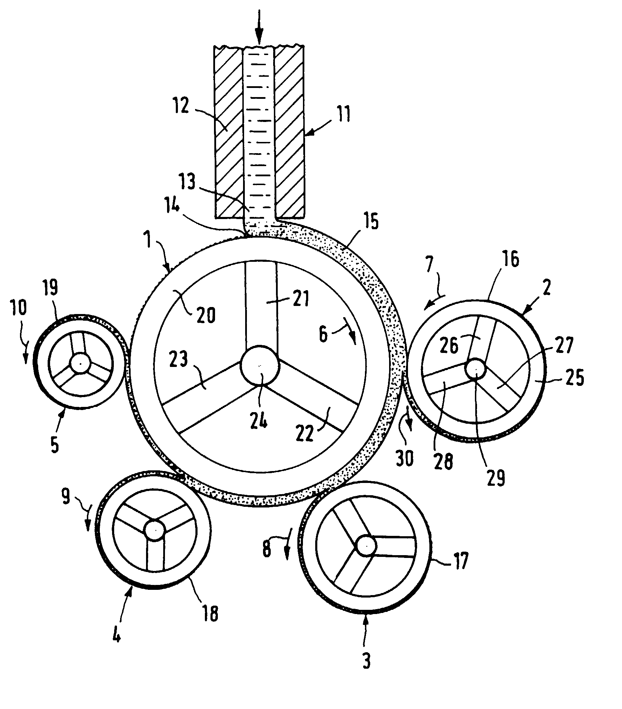

In der Zeichnung ist ein Ausführungsbeispiel der erfindungsgemäßen Vorrichtung im Schema dargestellt.

Die Vorrichtung besitzt eine zentrale Verteilungswalze 1, die einen großen Durchmesser aufweist und die vorzugsweise in Richtung des Pfeiles 6 mit einer Umfangsgeschwindigkeit von etwa 30 bis 70 m/s angetrieben wird. Um den Umfang der Verteilungswalze 1 sind bei diesem Ausführungsbeispiel vier Zerfaserungswalzen 2, 3, 4 und 5 mit einem wesentlich kleineren Durchmesser als die Verteilungswalze 1 und mit kleinem Abstand von dieser angeordnet. Die mit den Pfeilen 7, 8, 9 und 10 angegebenen Drehrichtungen der Zerfaserungs-walzen 2, 3, 4 und 5 sind entgegengesetzt zur Drehrichtung 6 der Verteilungswalze 1 gewählt, so daß die benachbarten Umfangsbereiche der Zerfaserungswalzen und der Verteilungswalze gleiche Bewegungsrichtung aufweisen, wie mit dem Pfeil 30 veranschaulicht ist, was sinngemäß nicht nur für die Zerfaserungswalze 2, sondern sinngemäß auch für die übrigen Zerfaserungswalzen gilt.

Wie aus der Zeichnung zu erkennen ist, sind die vier Zerfaserungswalzen 2, 3, 4 und 5 etwa über die untere Umfangshälfte der Verteilungswalze 1 verteilt angeordnet. Die Zerfaserungswalzen sind bevorzugt mit einer verhältnismäßig großen Umfangsgeschwindigkeit von 90 bis 170 m/s angetrieben.

Mit möglichst geringem Abstand über dem Scheitelbereich 14 der Verteilungswalze 1 ist eine Aufgabevorrichtung 11 für die Schmelze mit einer vertikalen auf die Breite der Verteilungswalze abgestimmten Austrittsöffnung 13 angeordnet. Die Aufgabevorrichtung 11 weist vorteilhaft ein mit feuerfesten Baustoffen ausgekleidetes auf dem Mantel geschlossenes vertikales Rohr 12 auf. Das Rohr besitzt eine sich leicht verengende düsenartige Austrittsöffnung 13. Um eine möglichst gleichmäßige Verteilung über die Breite der Verteilungswalze zu erreichen, weist die düsenartige Austrittsöffnung 13 einen elliptischen Querschnitt auf, wobei die große Ellipsenachse parallel zur Drehachse 24 der Verteilungswalze, d. h. senkrecht zur Bildebene, verläuft. Der elliptische Querschnitt ist so an die Breite der Verteilungswalze 1 angepaßt, daß die zur Verfügung stehende Umfangsfläche der Verteilungswalze möglichst vollständig ausgenutzt wird, ohne daß die Schmelze seitlich über die beiden Ränder der Umfangsfläche austreten kann. Das Rohr 12 ist am oberen Ende entweder direkt mit dem Auslaß des Kupolofens oder mit einem zwischengeschalteten Sammelbehälter für die Schmelze verbunden. Die Aufgabevorrichtung 11 kann auch ein beheiztes, nicht gezeichnetes Temperiergefäß für die Aufnahme der Schmelze aufweisen. Das Temperiergefäß ist dann wieder mit einem im Querschnitt ellipsenförmigen, an die Verteilungswalze 1 angepaßten Bodenauslauf versehen.

Der Durchmesser der Verteilungswalze 1 und die Abstände zwischen den Zerfaserungswalzen 2, 3, 4 und 5 sind so groß gewählt, daß die sich über den Umfang der Zerfaserungs-walzen gebildeten Faserströme ohne gegenseitige Überlappung abströmen können, und zwar durch die weiter unten erläuterten senkrecht zur Bildebene geführten Luft- und / oder Dampfströme. Die Abstände der Zerfaserungswalzen 2, 3, 4 und 5 von der Umfangsoberfläche der Verteilungswalze 1 sind in deren Drehrichtung 6 gesehen in dem Maße kleiner gewählt, in dem die Dicke der Schmelzeschicht 15 sich verringert, so daß von jeder Zerfaserungswalze jeweils eine Teilschicht aus der Schmelzeschicht 15 übernommen wird, um dann mittels der Zerfaserungswalzen in Fasern umgewandelt zu werden. Von Vorteil ist ferner, daß die Durchmesser der Zerfaserungswalzen in Drehrichtung der Verteilungswalze gesehen verringert sind, d. h. die Zerfaserungswalze 2 hat einen größeren Durchmesser als die Zerfaserungswalze 3 und diese hat wieder einen größeren Durchmesser als die Zerfaserungswalze 4 und die Zerfaserungswalze 5 hat dann den kleinsten Durchmesser. In diesem Zusammenhang ist eine weitere Ausgestaltung von Vorteil, wonach die Umfangsgeschwindigkeiten der Zerfaserungswalzen, wiederum in Drehrichtung 6 der Verteilungswalze gesehen, zunehmend gewählt sind, d. h. die Umfangsgeschwindigkeit der Zerfaserungswalze 3 ist größer als die der Zerfaserungswalze 2 und die größte Umfangsgeschwindigkeit hat dann die letzte Zerfaserungswalze 5.

Wie die Zeichnung veranschaulicht, verlaufen die Drehachsen bzw. Antriebswellen 24 und 29 der Verteilungswalze 1 und der Zerfaserungswalzen 2, 3, 4 und 5 achsparallel zueinander. Es hat sich als vorteilhaft erwiesen, die Breiten der Verteilungswalze 1 und der Zerfaserungswalzen 2 bis 5 bis zu etwa 15 cm, vorzugsweise bis etwa 10 cm zu wählen.

Sowohl die Verteilungswalze 1 als auch die Zerfaserungs-walzen 2 bis 5 sind vorteilhafterweise als ringförmige Hohlzylinder 20 bzw. 25 ausgebildet, welche vorteilhafterweise an einen geschlossenen Kühlwasserkreislauf angeschlossen sind. Dies erfolgt zweckmäßigerweise dadurch, daß die ringförmigen Hohlzylinder 20, 25 mittels radialen Speichen 21, 22 und 23 bzw. 26, 27 und 28 mit jeweils der entsprechenden Zentralwelle 24 bzw. 29 verbunden sind. Damit können auch die Speichen an den Kühlwasserkreislauf angeschlossen werden. Zur Erzeugung eines zentralen Transportluftstromes und / oder eines -dampfstromes können die Speichen sowohl der Verteilungswalze als auch der Zerfaserungswalzen als Propellerblätter ausgebildet werden, so daß die Luft- und / oder Dampfströme zum Abführen der gebildeten Fasern zentral durch die Walzen geleitet werden können. Alternativ kann man den ringförmigen Hohlzylindern 20 bzw. 25 auch separate Propellerräder vorschalten, welche mit der jeweiligen Zentralwelle 24 bzw. 29 verbunden und durch diese angetrieben sind. Alternativ können den Zerfaserungswalzen 2, 3, 4 und 5 auch ieweils ein Luftverdichter zur Erzeugung von Transportluftströmen zugeordnet werden. Der Antrieb kann dann über die entsprechende Zentralwelle erfolgen.

Ein wesentlicher Gesichtspunkt ist darin zu sehen, daß ein mit Kühlmittel vermischtes Bindemittel möglichst nahe an die Entstehungsbereiche der Mineralfasern, vorzugsweise an den Bereichen der Zerfaserungswalzen 2, 3, 4 und 5, eingesprüht wird. Eine intensive Benetzung der Fasern und damit eine erhöhte Ausbeute des Bindemittels kann auf diese Weise erreicht werden. Es ist möglich, die ringförmigen Hohlzylinder 25 der Zerfaserungswalzen mit entsprechenden Zuleitungen und Auslässen zu versehen, so daß Luft- und / oder Dampfströme hindurchgeleitet werden können. Aus fertigungstechnischen Gründen ist es aber einfacher und auch wirksamer, das mit Kühlmittel vermischte Bindemittel gegen den inneren Umfang des Hohlzylinders zu lenken, auf dem es dann auf Grund der Fliehkraft und der inneren Luftströmung nach außen herausgetragen wird.

Die Umfangsoberflächen der oben beschriebenen Walzen sind in weiterer Ausgestaltung der Erfindung so ausgebildet, daß eine Grenzfläche entsteht, auf der sich die zu zerfasernde Schmelze entsprechend der auf sie wirkenden Scherkräfte bewegen kann. Hierzu werden folgende vorteilhafte Ausgestaltungen vorgeschlagen.

Zweckmäßig können die Umfangsoberflächenbereiche der Walzen 1 bis 5 aus mit Chrom hochlegierten hitzebeständigen Stählen oder Stahlguß bestehen. Eine andere vorteilhafte Möglichkeit besteht darin, daß die Umfangsoberflächenbereiche der Walzen 1 bis 5 aus hitzebeständigem und gegen Temperaturwechsel unempfindlichen, feuerfesten Baustoffen, wie Aluminiumoxyden, zirkonoxydhaltigen Silikaten, Carbiden oder Nitriden, bestehen. Diese werden zur Sicherstellung einer ausreichenden Kühlung in Schichten von wenigen Millimetern bis zu etwa 2 cm Dicke aufgebracht. Weiterhin ist es von Vorteil, daß die Umfangsoberflächenbereiche der Walzen 1 bis 5 aus einem schichtig aufgebrachten Sintermetall bestehen, welches bis zu einer Tiefe von mindestens 2 mm eine Porösität von etwa 30 Volumen-% aufweist, und daß in diese Poren Sole eingebracht sind, welche durch Temperatureinwirkung über einen Gelzustand in dichte, feuerfeste Baustoffe umgewandelt sind.

Weiterhin wird vorgeschlagen, daß die Umfangsoberflächenbereiche der Walzen 1 bis 5 aus Sintermetallpulver, welches mit feinkörnigen keramischen Substanzen vermischt, isostatisch gepreßt und anschließend thermisch behandelt ist, ausgebildet sind. Auf diese Weise wird eine hohe Präzision in den Abmessungen erreicht. Ein weiterer Vorschlag geht dahin, daß die Umfangsoberflächenbereiche der Walzen 1 bis 5 eine metallische Tragschicht aufweisen, in welche in dichtem Abstand voneinander durch Laser- oder Elektronenstrahlen Löcher bis zu einer vorbestimmten Tiefe gebildet sind, die mit Solen gefüllt und durch thermische Behandlung in feste, temperaturbeständige, chemisch resistente, anorganische Werkstoffe überführt sind.

Die oben beschriebenen Walzen 1 bis 5, insbesondere bei der Ausgestaltung mit ringförmigen Hohlzylindern 20 bzw. 25 besitzen diese eine zylindrische Umfangsoberfläche. Eine andere vorteilhafte erfindungsgemäße Ausgestaltung besteht darin, daß die Verteilungswalze 1 und die Zerfaserungs-walzen 2 bis 5 kegelstumpfförmig ausgebildet und derart angeordnet sind, daß die große Grundfläche des Kegelstumpfes der Verteilungswalze 1 auf der Seite eines gemeinsamen Walzenantriebes und die großen Grundflächen der Kegelstümpfe der Zerfaserungswalzen 2 bis 5 von der Antriebsseite abliegend verlaufen. Dabei sind die Mantelwinkel der Kegelstümpfe aufeinander angepaßt, so daß die Abstände zwischen der Verteilungswalze 1 und den Zerfaserungswalzen 2 bis 5 denen bei der zylindrischen Ausbildung entsprechen. Bei der kegelstumpfförmigen Ausgestaltung der Walzen ergibt sich noch der Vorteil, daß die gebildeten Fasern schneller abgeführt werden können. Dies ist darauf zurückzuführen, daß die Umfangsgeschwindigkeit einer Walze mit größer werdendem Durchmesser zunimmt. Bei der vorgeschlagenen Anordnung unterliegen die gebildeten Fasern der größten Umfangsgeschwindigkeit an der Walzenkante der Zerfaserungswalzen mit dem größten Durchmesser. Auch bei diesem Ausführungsbeispiel kann die Hintereinanderschaltung der Zerfaserungswalzen so vorgesehen sein, daß sie mit steigender Umfangsgeschwindigkeit rotieren, um auf diese Weise die Schmelze bis auf die für die Zerfaserung erforderliche Endgeschwindigkeit zu bringen.

Die Wirkungsweise der oben beschriebenen Vorrichtung ist im wesentlichen folgende.

Die Schmelze wird ohne Gefahr einer zu führen Abkühlung durch die Aufgabevorrichtung 11 gleichmäßig auf die langsam rotierende Verteilungswalze aufgegeben, auf der sich eine gleichmäßig verteilte Schmelzschicht 15 bildet. Der wesentliche Gesichtspunkt hierbei ist, daß die Schmelze in einer vorteilhafterweise nur wenige Millimeter dicken Schicht kontinuierlich abgezogen wird. Die Umfangsgeschwindigkeit der Verteilungswalze und die Schichtdicke sind von der Viskosität und der Menge der zu verarbeitenden Schmelze abhängig. Dies gilt sinngemäß auch für die Zerfaserungs-walzen. Durch Wirkung der Zerfaserungswalzen und der gewählten Drehrichtungen werden von den Zerfaserungswalzen von der Schmelzschicht 15 jeweils etwa 1 bis 2 mm dicke Teilschichten der Schmelze abgezogen, so daß sich auf den Zerfaserungswalzen entsprechende Schmelzeschichten 16 bis 19 bilden. Da zuvor auf der Verteilungswalze eine gleichmäßige Schmelzeschicht 15 gebildet wurde, ergeben sich auch auf den Zerfaserungswalzen gleichmäßige Schmelzeverteilungen, die dann Grundlage und Voraussetzung für ein besonders hohes Ausbringen bzw. Dispergieren der Fasern von den Zerfaserungswalzen ist. Durch die oben beschriebene besondere Anordnung der Zerfaserungswalzen über den Umfang der Verteilungswalze können sich die einzelnen Faserströme, die von den Zerfaserungswalzen ausgehen, nicht gegenseitig überlappen, so daß sich auch zu Anfang keine Faseraggregate bilden können, in denen sich nichtfasrige Partikel verfangen können. Damit wird auch gleichzeitig gewährleistet, daß eine gleichmäßige Verteilung des Bindemittels auf den sich bildenden Fasern erfolgt.

## Patentansprüche

1. Vorrichtung zum Herstellen von Mineralfasern aus einer silikatischen Schmelze mit mehreren rotierenden Walzen, auf welche die Schmelze aufgegeben wird, dadurch gekennzeichnet, daß eine zentrale Verteilungswalze (1) mit großem Durchmesser vorgesehen ist, um deren Umfang mehrere Zerfaserungswalzen (2, 3, 4, 5) mit kleinem Durchmesser angeordnet sind, daß die Abstände der Zerfaserungswalzen (2, 3, 4, 5) von der Umfangsoberfläche der Verteilungswalze (1) in deren Drehrichtung (6) gesehen in dem Maße kleiner gewählt sind, in dem die Dicke der Schmelzeschicht (15) sich verringert, daß die Drehrichtung (7, 8, 9, 10) der Zerfaserungswalzen (2, 3, 4, 5) entgegengesetzt zur Drehrichtung (6) der Verteilungswalze (1) gewählt ist, so daß die benachbarten Umfangsbereiche der Zerfaserungswalzen (2, 3, 4, 5) und der Verteilungswalze (1) gleiche Bewegungsrichtung (30) aufweisen, und daß über dem Scheitelbereich (14) der Verteilungswalze (1) eine Aufgabevorrichtung (11) für die Schmelze mit einer vertikalen auf die Breite der Verteilungswalze abgestimmten Austrittsöffnung (13) angeordnet ist.

2. Vorrichtung nach Anspruch 1, dadurch gekennzeichnet, daß die Umfangsgeschwindigkeiten der Verteilungswalze (1) zu 30 bis 70 m/s und die der Zerfaserungs-walzen (2, 3, 4, 5) zu 90 bis 170 m/s gewählt sind.

3. Vorrichtung nach Anspruch 1 und 2, dadurch gekennzeichnet, daß vier Zerfaserungswalzen (2, 3, 4, 5), vorgesehen sind.

4. Vorrichtung nach Anspruch 3, dadurch gekennzeichnet, daß vier Zerfaserungswalzen (2, 3, 4, 5) etwa über die untere Umfangshälfte der Verteilungswalze (1) verteilt angeordnet sind.

5. Vorrichtung nach einem der vorhergehenden Ansprüche, dadurch gekennzeichnet, daß der Durchmesser der Verteilungswalze (1) und die Abstände zwischen den Zerfaserungswalzen (2, 3, 4, 5) so groß gewählt sind, daß die sich über den Umfang der Zerfaserungswalzen (2, 3, 4, 5) gebildeten Faserströme ohne gegenseitige Überlappung abströmen.

6. Vorrichtung nach einem der vorhergehenden Ansprüche, dadurch gekennzeichnet, daß die Durchmesser der Zerfaserungswalzen (2, 3, 4, 5) in Drehrichtung (6) der Verteilungswalze (1) gesehen verringert sind.

7. Vorrichtung nach einem der vorhergehenden Ansprüche, dadurch gekennzeichnet, daß die Umfangsgeschwindigkeiten der Zerfaserungswalzen (2, 3, 4, 5) in Drehrichtung (6) der Verteilungswalze (1) gesehen zunehmend gewählt sind.

8. Vorrichtung nach einem der vorhergehenden Ansprüche, dadurch gekennzeichnet, daß die Drehachsen oder Wellen (24, 29) der Verteilungswalze (1) und der Zerfaserungswalzen (2, 3, 4, 5) achsparallel zueinander verlaufen.

9. Vorrichtung nach einem der vorhergehenden Ansprüche, dadurch gekennzeichnet, daß die Verteilungswalze (1) und die Zerfaserungswalzen (2, 3, 4, 5) kegelstumpfförmig ausgebildet und derart angeordnet sind, daß die große Grundfläche des Kegelstumpfes der Verteilungswalze (1) auf der Seite eines gemeinsamen Walzenantriebes und die großen Grundflächen der Kegelstümpfe der Zerfaserungswalzen (2, 3, 4, 5) von der Antriebsseite abliegend verlaufen, und daß die Mantelwinkel der Kegelstümpfe aufeinander angepaßt sind.

10. Vorrichtung nach einem der vorhergehenden Ansprüche, dadurch gekennzeichnet, daß die Breiten der Verteilungswalze (1) und der Zerfaserungswalzen (2, 3, 4, 5) bis etwa 15 cm, vorzugsweise bis etwa 10 cm, gewählt sind.

11. Vorrichtung nach einem der vorhergehenden Ansprüche, dadurch gekennzeichnet, daß die Aufgabevorrichtung (1) ein mit feuerfesten Baustoffen ausgekleidetes auf dem Mantel geschlossenes vertikales Rohr (12) aufweist.

12. Vorrichtung nach Anspruch 11, dadurch gekennzeichnet, daß das Rohr (12) eine sich leicht verengende düsenartige Austrittsöffnung (13) aufweist.

13. Vorrichtung nach Anspruch 12, dadurch gekennzeichnet, daß die düsenartige Austrittsöffnung (13) einen elliptischen Querschnitt aufweist, daß die große Ellipsenachse parallel zur Drehachse (24) der Verteilungswalze (1) verläuft und der elliptische Querschnitt an die Breite der Verteilungswalze (1) angepaßt ist.

14. Vorrichtung nach einem der Ansprüche 1 bis 10, dadurch gekennzeichnet, daß die Aufgabevorrichtung (11) ein beheiztes Temperiergefäß für die Aufnahme der Schmelze aufweist, und daß das Temperiergefäß mit einem im Querschnitt ellipsenförmigen an die Verteilungswalze (1) angepaßten Bodenauslauf versehen ist.

15. Vorrichtung nach einem der vorhergehenden Ansprüche, dadurch gekennzeichnet, daß die Umfangsoberflächenbereiche der Walzen (1, 2, 3, 4, 5) aus mit Chrom hochlegierten hitzebeständigen Stählen oder Stahlguß bestehen.

16. Vorrichtung nach einem der Ansprüche 1 bis 14, dadurch gekennzeichnet, daß die Umfangsoberflächenbereiche der Walzen (1, 2, 3, 4, 5) aus hitzebeständigen und gegen Temperaturwechsel unempfindlichen, feuerfesten Baustoffen, wie Aluminiumoxyden, zirkonoxydhaltigen Zilikaten, Carbiden oder Nitriden, bestehen.

17. Vorrichtung nach Anspruch 16, dadurch gekennzeichnet, daß die Baustoffe in Schichten von wenigen Millimetern bis zu etwa 2 cm Dicke aufgebracht sind.

18. Vorrichtung nach einem der Ansprüche 1 bis 14, dadurch gekennzeichnet, daß die Umfangsoberflächenbereiche der Walzen (1 bis 5) aus einem schichtig aufgebrachten Sintermetall bestehen, welches bis zu einer Tiefe von mindestens 2 mm eine Porösität von etwa 30 Volumen-% aufweist, und daß in diese Poren Sole eingebracht sind, welche durch Temperatureinwirkung über einen Gelzustand in dichte, feuerfeste Baustoffe umgewandelt sind.

19. Vorrichtung nach einem der Ansprüche 1 bis 14, dadurch gekennzeichnet, daß die Umfangsoberflächenbereiche der Walzen (1 bis 5) aus Sintermetallpulver, welches mit feinkörnigen keramischen Substanzen vermischt, isostatisch gepreßt und anschließend thermisch behandelt ist, ausgebildet sind.

20. Vorrichtung nach einem der Ansprüche 1 bis 14, dadurch gekennzeichnet, daß die Umfangsoberflächenbereiche der Walzen (1 bis 5) eine metallische Tragschicht aufweisen, in welche in dichtem Abstand voneinander durch Laser- oder Elektronenstrahlen Löcher bis zu einer vorbestimmten Tiefe gebildet sind, die mit Solen gefüllt und durch thermische Behandlung in feste, temperaturbeständige, chemisch resistente, anorganische Werkstoffe überführt sind.

21. Vorrichtung nach einem der vorhergehenden Ansprüche, dadurch gekennzeichnet, daß die Walzen (1 bis 5) als ringförmige Hohlzylinder (20, 25) ausgehbildet sind, an welche ein geschlossener Kühlwasserkreislauf angeschlossen ist.

22. Vorrichtung nach Anspruch 21, dadurch gekennzeichnet, daß die ringförmigen Hohlzylinder (20, 25) mittels radialen Speichen (21, 22, 23; 26, 27, 28) mit einer Zentralwelle (24; 29) verbunden sind, und daß die Speichen (21, 22, 23; 26, 27, 28) an den Kühlwasserkreislauf angeschlossen sind.

23. Vorrichtung nach Anspruch 22, dadurch gekennzeichnet, daß die Speichen (21, 22, 23; 26, 27, 28) als Propellerblätter zur Erzeugung eines zentralen Transportluftstromes ausgebildet sind.

24. Vorrichtung nach Anspruch 21 und 22, dadurch gekennzeichnet, daß den ringförmigen Hohlzylindern (20, 25) separate Propellerräder vorgeschaltet sind, welche mit der jeweiligen Zentralwelle (24, 29) verbunden und durch diese angetrieben sind.

25. Vorrichtung nach einem der vorhergehenden Ansprüche, dadurch gekennzeichnet, daß den Zerfaserungswalzen (2, 3, 4, 5) ein oder mehrere Luftverdichter zur Erzeugung von Transportluftströmen zugeordnet sind, welche über eine jeweilige Zentralwelle angetrieben sind.

26. Vorrichtung nach einem der vorhergehenden Ansprüche, dadurch gekennzeichnet, daß ein mit Kühlmittel vermischtes Bindemittel möglichst nahe an die Entstehungsbereiche der Mineralfasern, vorzugsweise an den Bereichen der Zerfaserungswalzen (2, 3, 4, 5), eingesprüht wird.

## Claims

1. Apparatus for producing mineral fibers from a silicate melt comprising plural rotating rollers onto which the melt is loaded, characterized in that a central, large diameter distributing roller (1) is provided having arranged about its circumference plural small diameter defibration rollers (2, 3, 4, 5), that the distances of the defibration rollers (2, 3, 4, 5) from the circumferential surface of the distributing roller (1) seen in the rotational direction (6) thereof are selected to be smaller to such an extent that the thickness of the melt layer (15) reduces, that the rotational direction (7, 8, 9, 10) of the defibration rollers (2, 3, 4, 5) is chosen to be opposite to the rotational direction (6) of the distributing roller (1) so that the neighbouring circumferential portions of the defibration rollers (2, 3, 4, 5) and the distributing roller (1) have the same direction of movement (30), and that above the apex region (14) of the distributing roller (1) a feeding device (11) for feeding the melt is arranged comprising a vertical discharge opening (13) which is adapted to the width of the distributing roller.

2. Apparatus according to claim 1, characterized in that the peripheral speeds of the distributing roller (1) are chosen to be 30 to 70 m/s and that of the defibration rollers (2, 3, 4, 5) 90 to 170 m/s.

3. Apparatus according to claim 1 and claim 2, characterized in that four defibration rollers (2, 3, 4, 5) are provided.

4. Apparatus according to claim 3, characterized in that four defibration rollers (2, 3, 4, 5) are distributed over approximately the lower half of the circumference of the distributing roller (1).

5. Apparatus according to any one of the preceding claims, characterized in that the diameter of the distributing roller (1) and the distances between the defibration rollers (2, 3, 4, 5) are chosen to be as large that the fiber streams which have formed over the circumference of the defibration rollers (2, 3, 4, 5) stream off without mutual overlapping.

6. Apparatus according to any one of the preceding claims, characterized in that the diameters of the defibration rollers (2, 3, 4, 5) seen in the rotational direction (6) of the distributing roller (1) are reduced.

7. Apparatus according to any one of the preceding claims, characterized in that peripheral speeds of the defibration rollers (2, 3, 4, 5) seen in the rotational direction (6) of the distributing roller (1) are chosen to be increasing.

8. Apparatus according to any one of the preceding claims, characterized in that the rotational axes or shafts (24, 29) of the distributing roller (1) and the defibration rollers (2, 3, 4, 5) mutually extend parallel to the axis.

9. Apparatus according to any one of the preceding claims, characterized in that the distributing roller (1) and the defibration rollers (2, 3, 4, 5) are in the form of a truncated cone and are arranged so that the basis of the truncated cone of the distributing roller (1) extends on the side of a common roller drive mechanism and that the large bases of the truncated cones of the defibration rollers (2, 3, 4, 5) extend so as to be away from the driving side, and that the surface angles of the truncated cones are adapted to each other.

10. Apparatus according to any one of the preceding claims, characterized in that widths of the distributing roller (1) and the defibration rollers (2, 3, 4, 5) are chosen up to approx 15 cm, preferably up to approx 10 cm.

11. Apparatus according to any one of the preceding claims, characterized in that the feeding device (11) comprises a vertical tube (12) which is closed on the jacket and is lined with fireproof construction materials.

12. Apparatus according to claim 12, characterized in that the tube (12) has a slightly narrowing nozzle-like discharge opening (13).

13. Apparatus according to claim 12, characterized in that the nozzle-like discharge opening (13) has an elliptical cross section, that the major axis of the ellipse extends parallel to the rotational axis (24) of the distributing roller (1), and that the elliptical cross section is adapted to the width of the distributing roller (1).

14. Apparatus according to any one of the claims 1 to 10, characterized in that the feeding device (11) comprises a heated tempering vessel for receiving the melt, and that the tempering vessel is provided with a bottom flowing-out hole elliptical in cross section and adapted to the distributing roller (1).

15. Apparatus according to any one of the preceding claims, characterized in that the circumferential surface portions of the rollers (1, 2, 3, 4, 5) consist of heat-proof steels or cast steel high-alloyed with chromium.

16. Apparatus according to any one of the claims 1 to 14, characterized in that the circumferential surface portions of the rollers (1, 2, 3, 4, 5) consist of heat- and fireproof construction materials insensitive to temperature changes, such as aluminium oxides, zirconium oxide containing silicates, carbides or nitrides.

17. Apparatus according to claim 16, characterized in that the construction materials are applied in layers having a thickness ranging from a few millimeters up to approx 2 cm.

18. Apparatus according to any one of the claims 1 to 14, characterized in that the circumferential surface portions of the rollers (1 to 5) consist of a sintered metal applied in layers which up to a depth of 2 mm has a porosity of approx 30% by volume, and that sols are brought into these pores which are by temperature reaction converted via a gel condition into dense, fireproof construction materials.

19. Apparatus according to any one of the claims 1 to 14, characterized in that the circumferential surface portions of the rollers (1 to 5) are formed of sintered metal powder which is mixed with fine grained ceramic substances, isostatically pressed and subsequently thermally treated.

20. Apparatus according to any one of the claims 1 to 14, characterized in that the circumferential surface portions of the rollers (1 to 5) include a metallic base layer wherein which holes up to a predetermined depth are formed at a short distance to each other by laser or electron beams, said holes being filled with sols and are transformed to solid, temperature resistant, chemically resistant, anorganic construction materials.

21. Apparatus according to any one of the preceding claims, characterized in that the rollers (1 to 5) are formed as annular hollow cylinders (20, 25) to which a closed cooling water circuit is connected.

22. Apparatus according to claim 21, characterized in that the annular hollow cylinders (20, 25) are connected to a central shaft (24; 29) by means of radial spokes, and that the spokes (21, 22, 23; 26, 27, 28) are connected to the cooling water circuit.

23. Apparatus according to claim 22, characterized in that the spokes (21, 22, 23; 26, 27, 28) are formed as propeller blades for producing a central transport air stream.

24. Apparatus according to claim 21 and claim 22, characterized in that the annular hollow cylinders (20, 25) are topped by separate propeller wheels connected to an driven by the respective central shaft (24, 29).

25. Apparatus according to any one of the preceding claims, characterized in that the defibration rollers (2, 3, 4, 5) have associated one or plural air compressors for producing transport air streams, said air compressors being driven by a respective central shaft.

26. Apparatus according to any one of the preceding claims, characterized in that a binding agent mixed with a cooling agent is injected in close proximity to the formation zones of the mineral fibers, preferably at the zones of the defibration rollers (2, 3, 4, 5).

## Revendications

1. Dispositif pour fabriquer des fibres minérales à partir d'une masse fondue de silicate avec plusieurs tambours rotatifs sur lequels la masse fondue est amenée, caractérisé en ce qu'un cylindre central de répartition (1) avec un grand diamètre est prévu, sur la périphérie duquel plusieurs cylindres de défibrage (2, 3, 4, 5) avec un petit diamètre sont placés, que les écarts des cylindres de défibrage (2, 3, 4, 5) par rapport à la surface de la périphérie du cylindre de répartition (1), ceci étant vu dans le sens de rotation (6) de celui-ci, sont choisis plus petits au fur et à mesure que l'épaisseur de la couche de masse fondue (15) diminue, que le sens de rotation (7, 8, 9, 10) des cylindres de défibrage (2, 3, 4, 5) est choisi contraire au sens de rotation (6) du cylindre de répartition (1) si bien que les zones périphériques voisines des cylindres de défibrage (2, 3, 4, 5) et du cylindre de répartition (1) ont le même sens de mouvement (30) et qu'un dispositif d'alimentation (11) pour la masse fondue est placé au-dessus de la zone du sommet (14) du cylindre de répartition (1) avec une ouverture de sortie (13) verticale adaptée à la largeur du cylindre de répartition.

2. Dispositif selon la revendication 1, caractérisé en ce que les vitesses circonférentielles du cylindre de répartition (1) sont choisies de 30 à 70 m/s et celles des cylindres de défibrage (2, 3, 4, 5) de 90 à 170 m/s.

3. Dispositif selon la revendication 1 et 2, caractérisé en ce que quatre cylindres de défibrage (2, 3, 4, 5) sont prévus.

4. Dispositif selon la revendication 3, caractérisé en ce que quatre cylindres de défibrage (2, 3, 4, 5) sont placés répartis à peu près au-dessus de la moitié périphérique inférieure du cylindre de répartition (1).

5. Dispositif selon l'une des revendications précédentes, caractérisé en ce que le diamètre du cylindre de répartition (1) et les écarts entre les cylindres de défibrage (2, 3, 4, 5) sont choisis si grands que les courants de fibres formés sur la périphérie des cylindres de défibrage (2, 3, 4, 5) s'écoulent sans chevauchement mutuel.

6. Dispositif selon l'une des revendications précédentes, caractérisé en ce que les diamètres des cylindres de défibrage (2, 3, 4, 5) sont diminués, ceci étant vu dans le sens de rotation (6) du cylindre de répartition (1).

7. Dispositif selon l'une des revendications précédentes, caractérisé en ce que les vitesses circonférentielles des cylindres de défibrage (2, 3, 4, 5) sont choisies en augmentant, ceci étant vu dans le sens de rotation (6) du cylindre de répartition (1).

8. Dispositif selon l'une des revendications précédentes, caractérisé en ce que les axes de rotation ou les arbres (24, 29) du cylindre de répartition (1) et des cylindres de défibrage (2, 3, 4, 5) sont d'axe parallèle l'un à l'autre.

9. Dispositif selon l'une des revendications précédentes, caractérisé en ce que le cylindre de répartition (1) et les cylindres de défibrage (2, 3, 4, 5) sont configurés en forme de cône tronqué et sont placés de telle manière que la grande surface de base du cône tronqué du cylindre de répartition (1) sur le côté d'un entraînement de cylindre commun et les grandes surfaces de base des cônes tronqués des cylindres de défibrage (2, 3, 4, 5) vont en se décollant du côté de l'entraînement et que les angles des aires latérales des cônes tronqués sont adaptés l'un à l'autre.

10. Dispositif selon l'une des revendications précédentes, caractérisé en ce que les largeurs du cylindre de répartition (1) et des cylindres de défibrage (2, 3, 4, 5) sont choisies jusqu'à environ 15 cm, de préférence jusqu'à environ 10 cm.

11. Dispositif selon l'une des revendications précédentes, caractérisé en ce que le dispositif d'alimentation (1) présente un tube vertical (12) fermé sur l'enveloppe, revêtu de matériaux de construction réfractaires.

12. Dispositif selon la revendication 11, caractérisé en ce que le tube (12) présente une ouverture de sortie (13) de type tuyère qui se rétrécit légèrement.

13. Dispositif selon la revendication 12, caractérisé en ce que l'ouverture de sortie de type tuyère (13) présente une section elliptique, que le grand axe de l'ellipse est parallèle à l'axe de rotation (24) du cylindre de répartition (1) et la section elliptique est adaptée à la largeur du cylindre de répartition (1).

14. Dispositif selon l'une des revendications 1 à 10, caractérisé en ce que le dispositif d'alimentation (11) présente un récipient de températion chauffé pour recevoir la masse fondue et que le récipient de températion est pourvu d'une sortie au fond de section en forme d'ellipse, adaptée au cylindre de répartition (1).

15. Dispositif selon l'une des revendications précédentes, caractérisé en ce que les zones de surface périphériques des cylindres (1, 2, 3, 4, 5) sont en aciers résistants à la chaleur fortement alliés à du chrome ou en acier moulé.

16. Dispositif selon l'une des revendications 1 à 14, caractérisé en ce que les zones de surface périphériques des cylindres (1, 2, 3, 4, 5) sont constituées en matériaux de construction réfractaires résistants à la chaleur et insensibles aux changements de température, comme des oxydes d'aluminium, des silicates contenant de l'oxyde de zirconium, des carbures ou des nitrures.

17. Dispositif selon la revendication 16, caractérisé en ce que les matériaux de construction sont appliqués en couches de quelques millimètres jusqu'à environ 2 cm d'épaisseur.

18. Dispositif selon l'une des revendications 1 à 14, caractérisé en ce que les zones de surface périphériques des cylindres (1 à 5) sont constituées en un métal fritté appliqué en couches qui présente jusqu'à une profondeur d'au moins 2 mm une porosité d'environ 30 % en volume et que des eaux salées sont apportées dans ces pores qui sont transformées par l'effet de la température en matériaux de construction réfractaires denses en passant par un état de gel.

19. Dispositif selon l'une des revendications 1 à 14, caractérisé en ce que les zones de surface périphériques des cylindres (1 à 5) sont formées en poudre de métal fritté qui est mélangée à des substances céramiques à grains fins, compressée isostatiquement et ensuite traitée thermiquement.

20. Dispositif selon l'une des revendications 1 à 14, caractérisé en ce que les zones de surface périphériques des cylindres (1 à 5) présentent une couche porteuse métallique dans laquelle des trous sont formés à un écart près les uns des autres par des rayons laser ou des rayons d'électrons jusqu'à une profondeur prédéfinie, trous qui sont remplis d'eaux salées et qui sont transformés par traitement thermique en matériaux anorganiques solides, résistants aux températures, résistants aux substances chimiques.

21. Dispositif selon l'une des revendications précédentes, caractérisé en ce que les cylindres (1 à 5) sont configurés comme des cylindres creux (20, 25) annulaires auxquels est raccordé un circuit d'eau de refroidissement fermé.

22. Dispositif selon la revendication 21, caractérisé en ce que les cylindres creux (20, 25) annulaires sont reliés au moyen de rayons radiaux (21, 22, 23 ; 26, 27, 28) à un arbre central (24 ; 29) et que les rayons (21, 22, 23 ; 26, 27, 28) sont raccordés au circuit d'eau de refroidissement.

23. Dispositif selon la revendication 22, caractérisé en ce que les rayons (21, 22, 23 ; 26, 27, 28) sont configurés comme des pales d'hélice pour générer un courant d'air de transport central.

24. Dispositif selon la revendication 21 et 22, caractérisé en ce que des roues d'hélice séparées sont placées en amont des cylindres creux (20, 25) annulaires, roues qui sont reliées à l'arbre central respectif (24, 29) et qui sont entraînées par celui-ci.

25. Dispositif selon l'une des revendications précédentes, caractérisé en ce qu'un ou plusieurs compresseurs d'air sont affectés aux cylindres de défibrage (2, 3, 4, 5) pour générer des courants d'air de transport, compresseurs qui sont entraînés par un arbre central respectif.

26. Dispositif selon l'une des revendications précédentes, caractérisé en ce qu'un liant mélangé à du produit de refroidissement est pulvérisé le plus près possible des zones de formation des fibres minérales, de préférence sur les zones des cylindres de défibrage (2, 3, 4, 5).
